Europäisches Patentamt

European Patent Office

Office européen des brevets

(11) Publication number: **0 068 575**
**B1**

# EUROPEAN PATENT SPECIFICATION

(45) Date of publication of patent specification: **16.10.85**

(51) Int. Cl.⁴: **B 65 G 1/06**

(21) Application number: **82200768.8**

(22) Date of filing: **18.06.82**

(54) Stacking device.

(30) Priority: **19.06.81 NL 8102986**

(43) Date of publication of application:
**05.01.83 Bulletin 83/01**

(45) Publication of the grant of the patent:
**16.10.85 Bulletin 85/42**

(84) Designated Contracting States:
**AT CH DE FR GB IT LI NL SE**

(56) References cited:
**DE-A-2 159 534**
**GB-A-1 596 779**

(73) Proprietor: **Kooiman, Pieter Leendert**
**Achterambachtseweg 17**
**NL-3342 LA Hendrik Ido Ambacht (NL)**

(72) Inventor: **Kooiman, Pieter Leendert**
**Achterambachtseweg 17**
**NL-3342 LA Hendrik Ido Ambacht (NL)**

(74) Representative: **van Assen, Jan Willem Bernard,**
**Ir.**
**Konijnenlaan 22**
**NL-2243 ER Wassenaar (NL)**

Courier Press, Leamington Spa, England.

## Description

The invention relates to a device for stacking articles, of which the upper most article of the stack is always kept at a certain level, which device comprises a vertical container with an opening on the upper side for the stack of articles, whereas in the container a carrier can be displaced under the influence of main spring means, and in which the carrier is constructed with a body part, that is connected to main support means, and a supporting plane part, on which the upper most article of the stack of articles is placed.

Devices of this type are known in strongly varying embodiments, such as for example from the German Patent Specification 21 59 435. They have, however, the objection that the effective height is relatively small, in that the carrier has a considerable height, such as in particular when using tension springs as main spring means. The carrier should then have a height which is at least equal to the length of the tension springs in unextended condition. The total height of the device should be decreased with the height of the carrier for obtaining the effective height which is at the disposal for the stack of articles. If one tries to increase the effective height of the device by taking the unextended length of the spring small and extending these completely to the bottom of the device there is the danger of overloading and ultimately rupture of the tension springs.

Furthermore from the German utility model 79 26 054 a stacking device is known according to the preamble of claim 1, in which for the increase of the effective height the supporting plane of the carrier is already lowered with respect to the upper side of the container and lies substantially at the same level as the lower end of the main spring means. This is amongst others advantageous for somewhat higher articles, which may not extend above the stacking device at a low stacking height, so that the stacking of filled stacking devices on top of each other during for example transport stays possible. With flat articles the lower most articles of a stack lie, however, lower than the upper side of the container, which may make the insertion or taking off difficult.

The purpose of the invention is making use as much as possible of the total height of the device, or the increase of operative height thereof by the decrease of the unused height, which is determined by the length of the tension springs and/or the height of the carrier, without the insertion or taking off of low articles at small stacking height being made difficult.

This purpose is achieved according to the invention, in that the support plane part is relatively movable with respect to the body part under the influence of auxiliary spring means.

By the use of the invention there is achieved, that under a gradually increasing loading of articles the support plane part moves between an unloaded initial position, in which the support plane is at its maximum distance from the suspended part of the carrier, and a fully loaded end position, in which the auxiliary springs have made their full stroke and the support plane rests substantially on the suspended part of the carrier. In this way the support plane is able to occupy a smaller height in the bottom of the device when loaded with the maximum capacity of objects, as a result of which the unused height of the device is decreased and the article capacity of the device is increased correspondingly.

According to a first preferential embodiment of the invention the constant of elasticity of the auxiliary spring means is smaller than the constant of elasticity of the main spring means. This has a result, that the support plane springs through quicker than the carrier itself, through which the first articles of the stack sink away easier and are directly led into the device.

According to a second preferential embodiment of the invention the auxiliary spring means are connected between the supporting plane part and the body part, in such a way that the carrier is telescopically elastically compressable.

According to a third preferential embodiment of the invention in a stacking device, in which around the opening of the container an edge flange is arranged, on which by means of a number of main tension springs a number of outer edge parts of the body part of the carrier is suspended, the auxiliary spring means are formed by one or more compression springs.

By this combination of tension springs for the main carrier and one or more compression springs for the support plane a stacking device is obtained, which on the one hand makes a maximum use of the available height, through which the capacity is increased, whereas on the other hand in a simple manner adaptation is possible to articles of different weight by a simple exchange of the springs.

Furthermore the attention is drawn to the British Patent Specification 1.596.779 is no prior publication but only a prior right for Great Britain and not for other countries of the European Patent Convention. Herein a stacking device is described, corresponding with claims 1 through 5 of the present application. As auxiliary spring means here, however, leaf springs are applied which are bent double and are loaded with compression, whereas the opening of the container is round and the carrier square. With reference to GB—A— 1596779, the applicant has voluntarily limited the scope of the present application and submitted separate claims for Great Britain.

The invention will now be further elucidated referring to the accompanying drawing of an embodiment.

Fig. 1 shows a schematic side view in axial cross section of a stacking device according to the invention in unloaded condition.

Fig. 2 shows a similar view as Fig. 1, however in unloaded condition, in which the stacking device contains a maximum stack of plates.

According to the drawing the stacking device comprises a container 1 which is provided at the upper side with an opening 2 which is surrounded by an edge flange 3. The shape of the opening 2, can be different, such as round, square, elliptical or such, and is fully dependent on the plan view of the articles to be stacked.

On the edge flange 3 with a vertical, short coupling piece 4, with a number of (not shown) holes a number of tension springs 5 is suspended, of which the lower end is hooked in the (not shown) openings in a similar coupling piece 6 of a carrier body 7. This carrier body 7 is provided at the upper side with a support plane 8 for the articles 9 to be stacked, such as dinner plates in the embodiment shown.

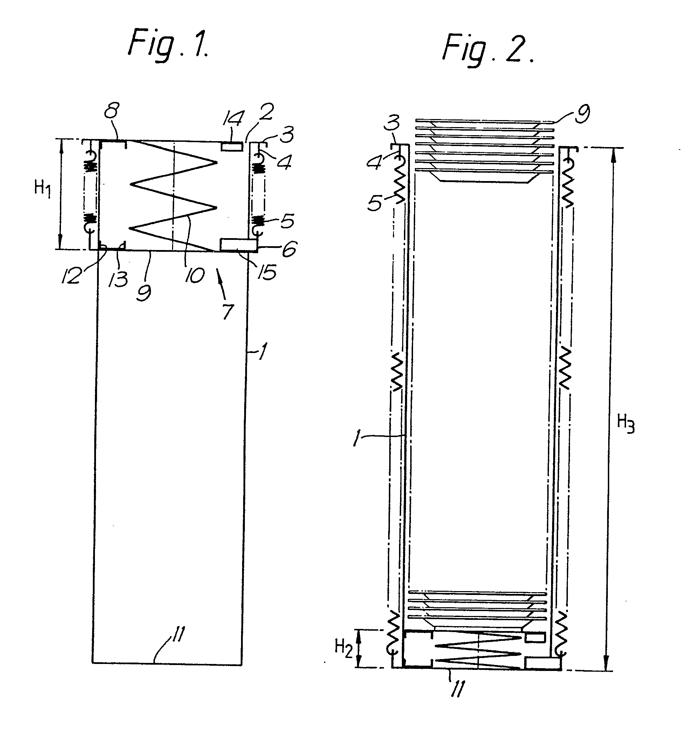

Fig. 1 shows two embodiments of the carrier 7, 8: the left half has circular vertical flanges 12, 13 and the right half vertical strips 14 and 15. It is evident that also other variants are possible.

Between the support plane 8 and the bearing plane 19 of the carrier body 7 a central, helical spring 10 is connected, which is more in particular adapted to be loaded by compression. At loading the support plane 8 of the carrier 7 the spring 10 is compressed and the carrier height H1 in unloaded condition when loaded is decreased to lower values.

Fig. 2 shows that the carrier 7 has completely moved into the container 2 and that the lower plane 19 of the carrier 7 rests on the bottom 11 of this container. Thereby the tension springs 5 are maximally extended, whereas the compression spring 10 is compressed, so that the distance between the support plane 8 and the bearing plate 19 of the carrier 7 is decreased to the minimal distance H2 in Fig. 2.

As H2 is smaller than H1 a more efficient use is made of the total height H3 of the container 1.

Instead of a single central helical compression spring 10 also a number of compression springs, both helical or leaf shaped or further differently executed, can be connected between the support plane 8 and the bearing plane 19 of the carrier 7, provided that an uninterrupted telescopical compression and extension at placing the removal respectively of a stack of plates stays guaranteed.

The constant of elasticity Cv10 of the one or more auxiliary springs 10 is in the shown embodiment smaller than the constant of elasticity Cv5 of the main springs 5. It is also possible that this spring constant Cv10 is equal or larger than Cv5, provided that these springs 10 are compressed in the position of the carrier in the bottom of the container 1 (viz. Fig. 2).

**Claims for the Contracting States AT, CH, DE, FR, IT, LI, NL, SE**

1. Device for stacking of articles (9), in which the upper most article of the stack is always maintained at a certain height, which device comprises a vertical container (1) for the stack of articles, said container being open at the upper side and a carrier (7) displaceable in the container under the influence of main spring means (5), the carrier comprising a body part (7), connected to the main spring means (5), and a support plane part (8), on which the lower most article of the stack of articles (9) is placed, characterized in that the support plane part (8) is relatively movable with respect to the body part (7) under the influence of auxiliary spring means (10).

2. Device according to claim 1, characterized in that the constant of elasticity of the auxiliary spring means (10) is smaller than the constant of elasticity of the main spring means (5).

3. Device according to claim 1 or 2, characterized in that the auxiliary spring means are connected between the support plane part (8) and the body part (7), such that the carrier is telescopically elastically compressible.

4. Device according to any one of the claims 1—3, in which around the opening (2) of the container (1) there is arranged an edge flange (3), on which a plurality of outer edge parts (6) of the body part (7) of the carrier is suspended by means of a plurality of main tension springs (5), characterized in that the auxiliary spring means (10) are formed by one or more compression springs.

5. Device according to claim 4, characterized in that the one or more compression springs (10) are arranged in the space above a bearing plane (19) of the carrier body (7) and below a pressure plane of the support plane part (8).

6. Device according to claims 4 or 5, characterized in that the one or more compression springs (10) are helical springs.

7. Device according to any one of the claims 4 to 6 characterized in that as compression spring a single central helical spring (10) is used.

8. Device according to any one of the claims 1—7, characterised in that, the cross section of the opening (2) of the container (1) is of the same form as that of the carrier (7).

**Claims for the Contracting State: GB**

1. Device for stacking of articles (9), in which the upper most article of the stack is always kept at a certain height, which device comprises a vertical container (1) for the stack of articles, which container is open at the upper side and has around the opening (2) of the container (1) an edge flange (3), on which a plurality of outer edge parts (6) of the body part (7) of a carrier is suspended by means of a plurality of main tension springs (5), which carrier is movable in the container under the influence of the stack of articles and of the tension of the main tension springs (5), in which the carrier comprises a support plane part (8), on which the lower most article of the stack of articles (9) is placed, whereas in the space above a bearing plane (19) of the carrier body (7) and below a bearing plane of the support plane part (8) one or more auxiliary compression springs (10) are fixed, so that the carrier is telescopically elastically compressible and thereby the support plane part (8) is relatively movable with respect to the body part (7) under the influence of the auxiliary compression springs (10), of which auxiliary compression springs (10) the constant of elasticity is smaller than that of the main tension springs (5), characterixed in that the one or more auxiliary compression springs (10) are helical springs.

2. Device according to claim 1, characterized in that a compression spring a single central helical spring (10) is used.

3. Device according to one or more of the claims 1 or 2, characterized in that the cross section of the opening (2) of the container (1) is of the same form as that of the carrier.

**Patentansprüche für die Vertragsstaaten AT, CH, DE, FR, IT, LI, NL, SE**

1. Vorrichtung zum Stapeln von Gegenständen (9), in welcher der oberste Gegenstand des Stapels immer in einer bestimmten Höhe gehalten ist, mit einem senkrechten Behälter (1) für den Stapel von Gegenständen, welcher an der Oberseite offen ist, und einem unter dem Einfluß einer Hauptfederanordnung (5) im Behälter bewegbaren Träger (7), welcher einen mit der Hauptfederanordnung (5) verbundenen Tragkörper (7) und ein eine Auflagefläche darstellendes Teil (8) aufweist, auf welches der unterste Gegenstand des Stapels von Gegenständen (9) aufgesetzt ist, dadurch gekennzeichnet, daß das die Auflagefläche darstellende Teil (8) unter dem Einfluß einer Zusatzfederanordnung (10) relativ zum Tragkörper (7) bewegbar ist.

2. Vorrichtung nach Anspruch 1, dadurch gekennzeichnet, daß die Elastizitätskonstante der Zusatzfederanordnung (10) kleiner ist als die Elastizitätskonstante der Hauptfederanordnung (5).

3. Vorrichtung nach Anspruch 1 oder 2, dadurch gekennzeichnet, daß die Zusatzfederanordnung derart zwischen dem die Auflagefläche darstellenden Teil (8) und dem Tragkörper (7) angeordnet und damit verbunden ist, daß der Träger teleskopartig elastich komprimierbar ist.

4. Vorrichtung nach einem der Ansprüche 1 bis 3, bei welcher die Öffnung (2) des Behälters (1) entlang ihrem Rand von einem Flansch (3) umgeben ist, an welchem eine Anzahl äußerer Randteil (6) des Tragkörpers (7) des Trägers mittels einer Anzahl von als Zugfedern ausgebildeten Hauptfedern (5) aufgehängt ist, dadurch gekennzeichnet, daß die Zusatzfederanordnung (10) durch eine oder mehrere Druckfedern gebildet ist.

5. Vorrichtung nach Anspruch 4, dadurch gekennzeichnet, daß die eine oder mehreren Druckfeder(n) (10) in einem Zwischenraum oberhalb einer Stützfläche (19) des Tragkörpers (7) und unterhalb einer Druckfläche des die Auflagefläche darstellenden Teils (8) angeordnet ist bzw. sind.

6. Vorrichtung nach Anspruch 4 oder 5, dadurch gekennzeichnet, daß die eine oder mehreren Druckfeder(n) (10) Schraubenfedern sind.

7. Vorrichtung nach einem der Ansprüche 4 bis 6, dadurch gekennzeichnet, daß als Druckfeder eine einzige mittig angeordnete Schraubenfeder (10) verwendet ist.

8. Vorrichtung nach einem der Ansprüche 1 bis 7, dadurch gekennzeichnet, daß der Querschnitt der Öffnung (2) des Behälters (1) die gleiche Form hat wie der des Trägers (7).

**Patentansprüche für den Vertragsstaat GB**

1. Vorrichtung zum Stapeln von Gegenständen (9), in welcher der oberste Gegenstand des Stapels immer in einer bestimmten Höhe gehalten ist, mit einem senkrechten Behälter (1) für den Stapel der Gegenstände, welcher an der Oberseite offen ist und einen die Öffnung (2) des Behälters (1) entlang seinem Rand umgebenden Flansch (3) aufweist, an welchem eine Anzahl äußerer Randteile (6) des Tragkörpers (7) eines Trägers mittels einer Anzahl von Hauptzugfedern (5) aufgehängt sind, wobei der Träger unter dem Einfluß des Stapels von Gegenständen und der Spannung der Haupt-Zugfedern (5) im Behälter bewegbar ist und ein eine Auflagefläche darstellendes Teil (8) aufweist, auf welches der unterste Gegenstand des Stapels von Gegenständen (9) aufgesetzt ist, während in dem Zwischenraum über einer Stützfläche (19) des Tragkörpers (7) und unter einer Stützfläche des die Auflagefläche darstellenden Teils (8) eine oder mehrere Zusatz-Druckfedern (10) befestigt sind, so daß der Träger teleskopartig elastisch komprimierbar ist und das die Auflagefläche darstellende Teil (8) unter dem Einfluß der Zusatz-Druckfedern relativ zum Tragkörper (7) bewegbar ist, und wobei die Elastizitätskonstante der Zusatz-Druckfedern (10) kleiner ist als die der Hauptzugfedern (5), dadurch gekennzeichnet, daß die eine oder mehreren Zusatz-Druckfedern (10) Schraubenfeder sind.

2. Vorrichtung nach Anspruch 1, dadurch gekennzeichnet, daß als Druckfeder, eine einzige mittig angeordnete Schraubenfeder (10) verwendet ist.

3. Vorrichtung nach Anspruch 1 und/oder 2, dadurch gekennzeichnet, daß der Querschnitt der Öffnung (2) des Behälters (1) die gleich Form hat wie der des Trägers.

**Revendications pour les Etats Contractants AT, CH, DE, FR, IT, LI, NL, SE**

1. Dispositif d'empilage d'articles (9), dans lequel l'article le plus haut de la pile est toujours maintenu à une certaine hauteur, ce dispositif comportant un récipient vertical (1) pour la pile d'articles, ledit récipient étant ouvert du côté haut et un porte-articles (7) pouvant être déplacé dans le récipient sous l'effet d'un moyen de sollicitation élastique principal (5), le porte-articles étant composé d'un corps (7), relié au moyen de sollicitation élastique principal (5) et d'une pièce de plan porteur (8), sur laquelle est placé l'article le plus bas de la pile d'articles (9), caractérisé en ce que la pièce de plan porteur (8) peut être déplacée par rapport au corps (7) sous l'effet d'un moyen de sollicitation élastique auxiliaire (10).

2. Dispositif selon la revendication 1, caractérisé en ce que la constante d'élasticité du moyen de sollicitation élastique auxiliaire (10) est inférieure à celle du moyen de sollicitation élastique principal (5).

3. Dispositif selon la revendication 1 ou 2, caractérisé en ce que le moyen de sollicitation élastique auxiliaire est monté entre la pièce de plan porteur (8) et le corps (7) de façon que le porte-articles soit compressible élastiquement à coulissement.

4. Dispositif selon l'une quelconque des revendications 1 à 3, dans lequel l'ouverture (2) du récipient (1) est entourée par un rebord marginal (3) auquel le bord extérieur (6) du corps (7) du porte-articles est suspendu au moyen de ressorts de traction principaux (5), caractérisé en ce que le moyen de sollicitation élastique principal (10) est constitué par un ou plusieurs ressorts de compression.

5. Dispositif selon la revendication 4, caractérisé en ce que le ou les ressorts de compression (10) sont disposés dans l'espace surmontant une plaque d'appui (19) du corps (7) du porte-articles et sous un plan de pression du plan porteur (8).

6. Dispositif selon la revendication 5, caractérisé en ce que le ou chaque ressort de compression (10) est un ressort hélicoïdal.

7. Dispositif selon l'une quelconque des revendications 4 à 6, caractérisé en ce qu'on utilise comme ressort de compression un seul ressor hèlicoidal central (10).

8. Dispositif selon l'une quelconque des revendications 1 à 7, caractérisé en ce que la section de l'ouverture (2) du récipient (1) a la même forme que celle du porte-articles (7).

**Revendications pour l'Etat Contractant GB**

1. Dispositif pour l'empilage d'articles (9), dans lequel l'article le plus haut de la pile est toujours maintenu à une certaine hauteur, lequel dispositif comprend un récipient vertical (1) pour la pile d'articles, lequel récipient est ouvert du côté supérieur et présente autour de son ouverture (2) un rebord marginal (3), sur lequel une série de parties de rebord extérieur (6) de la partie de corps (7) d'un support est suspendue au moyen d'une série de ressorts de traction principaux (5), lequel support est mobile dans le récipient sous l'action de la pile d'articles et de la traction des ressorts de traction principaux (5), dans lequel le support présente un partie de plan de support (8), sur laquelle est placé l'article le plus bas de la pile d'articles (9), tandis que dans l'espace situé audessus d'un plan porteur (19) du corps de support (7) et au-dessous d'un plan porteur de la partie de plan de support (8) un ou plusieurs ressorts de compression auxiliaires (10) sont fixés, de sorte que le support est compressible élastiquement de manière télescopique et que de ce fait la partie de plan de support (8) est mobile par rapport à la partie de corps (7) sous l'action de ressorts de compression auxiliaires (10), ces ressorts de compression auxiliaires (10) ayant une constante d'élasticité plus faible que celle des ressorts de traction principaux (5), caractérisé en ce que le ou les ressorts de compression auxiliaires (10) sont des ressorts hélicoïdaux.

2. Dispositif selon la revendication 1, caractérisé en ce qu'on utilise comme ressort de compression un seul ressort hélicoïdal central (10).

3. Dispositif selon l'une et/ou l'autre des revendications 1 et 2, caractérisé en ce que la section de l'ouverture (2) du récipient (1) a la même forme que celle du support.

Fig. 1.

Fig. 2.